# EUROPÄISCHE PATENTANMELDUNG

(11) **EP 4 164 012 A1**
(43) Veröffentlichungstag der Anmeldung: **12.04.2023**
(21) Anmeldenummer: 22195011.6
(22) Anmeldetag: 12.09.2022
(51) Int. Cl.: H01M 8/04089, B60L 50/72, B60L 58/30, H01M 8/04313, H01M 8/0444, H01M 8/10

(54) **VERFAHREN ZUM BETREIBEN EINES BRENNSTOFFZELLENSYSTEMS IN EINEM SCHIENENFAHRZEUG**

(30) Priorität: 30.09.2021 DE 102021211032
(71) Anmelder: Siemens Mobility GmbH, 81739 München (DE)
(72) Erfinder: Antrack, Markus, 01589 Riesa (DE); Peymandar, De-Niang Maria, 41199 Mönchengladbach (DE)
(74) Vertreter: Siemens Patent Attorneys

(57) **Zusammenfassung**

Die Erfindung betrifft ein Verfahren zum Betreiben eines Brennstoffzellensystems, wobei das Brennstoffzellensystem einer Erzeugung elektrischer Energie für einen Betrieb eines Schienenfahrzeugs dient, und wobei das Brennstoffzellensystem zumindest einen PEM-Brennstoffzellenstapel, eine erste Zuführung, welche ausgestaltet ist, Wasserstoff als Brenngas einer Anodenseite des Brennstoffzellenstapels zuzuführen, eine zweite Zuführung, welche ausgestaltet ist, Luft als Oxidationsgas einer Kathodenseite des Brennstoffzellenstapels zuzuführen, und zumindest eine Filtervorrichtung, welche in der zweiten Zuführung angeordnet ist und ausgestaltet ist, dem Brennstoffzellenstapel zugeführte Luft zu filtern, wobei die Filtervorrichtung ein erstes Filter, welches einer Filterung von Partikeln dient, und ein zweites Filter, welches einer Filterung von gasförmigen Schadstoffen dient, aufweist, umfasst. Ein Zeitpunkt eines Austausches des zweiten Filters wird erfindungsgemäß abhängig von einem Beladungszustand des zweiten Filters bestimmt, wobei der Beladungszustand mittels Messungen von Konzentrationen der gasförmigen Schadstoffe außerhalb des Brennstoffzellensystems sowie eines vorbestimmten Beladungsmodells des zweiten Filters ermittelt wird.

## Beschreibung

Die Erfindung betrifft ein Verfahren zum Betreiben eines Brennstoffzellensystems in einem Schienenfahrzeug, wobei das Brennstoffzellensystem zumindest eine Filtervorrichtung aufweist.

Insbesondere im Regional- und Fernverkehr werden Schienenfahrzeuge vorzugsweise mittels Oberleitungen mit elektrischer Energie versorgt, wodurch vorteilhaft auf dem Schienenfahrzeug selbst keine elektrische Energie erzeugt werden muss. Es existieren jedoch weiterhin Strecken bzw. Streckenabschnitte des Schienennetzes, welche nicht mit einer solchen Infrastruktur ausgerüstet sind. So sind beispielsweise in der Bundesrepublik Deutschland aktuell noch ca. 40% des Schienennetzes nicht elektrifiziert. Auf solchen nicht- oder teilelektrifizierten Strecken bzw. Streckenabschnitten werden daher weiterhin Schienenfahrzeuge eingesetzt, welche die für den Antrieb bzw. die Traktion und den Betrieb von Nebenverbrauchern bzw. so genannten Hilfsbetrieben erforderliche elektrische Energie mittels Verbrennungskraftmaschinen generieren.

Um einen im Vergleich zu solchen mit Verbrennungskraftmaschinen betriebenen Schienenfahrzeugen umweltfreundlicheren Betrieb auf nicht elektrifizierten Strecken bzw. Streckenabschnitten zu ermöglichen, können Schienenfahrzeuge mit elektrischen Energiespeichern, so genannten Traktionsbatterien, ausgerüstet werden. Abhängig von der in diesen elektrischen Energiespeichern speicherbaren Energiemenge kann ein Schienenfahrzeug eine bestimmte Distanz ohne eine Versorgung über eine Oberleitung zurücklegen. Ein Einsatz solcher Energiespeicher eignet sich insbesondere für den Regionalverkehr mit kleineren Distanzen zwischen Haltestellen. Die Energiespeicher werden bei Befahren elektrifizierter Streckenabschnitte bzw. während eines Halts über eine beispielsweise im Bereich von Haltestellen angeordnete geeignete Ladeinfrastruktur wieder mit elektrischer Energie geladen.

Für den Einsatz im weiteren Regionalverkehr sowie Fernverkehr mit üblicherweise größeren Distanzen zwischen Haltestellen ist die Ausrüstung von Schienenfahrzeugen allein mit elektrischen Energiespeichern hingegen weniger geeignet, da die speicherbare Energiemenge zu gering ist bzw. Gewicht und Ausmaße entsprechend dimensionierter Energiespeicher eine Kapazität des Schienenfahrzeugs übersteigen bzw. den für die Personenbeförderung zur Verfügung stehenden Raum nachteilig beschränken würden.

Insbesondere im Fernverkehr wird als Alternative zu Traktionsbatterien ein Einsatz von Brennstoffzellen als sinnvoll erachtet, welche mittels eines elektro-chemischen Prozesses aus einem Brennstoff elektrische Energie generieren. Ergänzend zu den eigentlichen Brennstoffzellen und deren Hilfsbetrieben sind hierfür insbesondere Brennstoffspeicher sowie elektrische Energiespeicher erforderlich, wobei die elektrischen Energiespeicher eine im Vergleich zu einer Traktionsbatterie jeweils deutlich geringere Speicherkapazität aufweisen können, da sie vorwiegend der Versorgung der Hilfsbetriebe der Brennstoffzelle, insbesondere während einer Inbetriebnahme, sowie als Pufferspeicher einem Ausgleich kurzzeitiger Lastschwankungen dienen.

Als besonders geeignet für den Einsatz in Schienenfahrzeugen wird eine Membran-Brennstoffzelle, bekannt unter den Begriffen Protonenaustauschmembran-Brennstoffzelle (Englisch: Proton Exchange Membrane Fuel Cell, PEMFC) bzw. Polymer-Elektrolyt-Brennstoffzelle (Englisch: Polymer Electrolyte Fuel Cell, PEFC), angesehen, da diese sowohl schnelle Lastwechsel zulässt als auch mit Lastwechseln verbundene Temperaturschwankungen im Vergleich zu anderen bekannten Brennstoffzellentypen gut kompensieren kann. Nachfolgend wird dieser Brennstoffzellentyp als PEM-Brennstoffzelle bezeichnet.

Brennstoffzellentypen werden nach dem jeweils verwendeten Elektrolyten unterschieden. In einer PEM-Brennstoffzelle übernimmt eine dünne, gasdichte und protonenleitende Kunststofffolie die Funktion des Elektrolyten und wirkt als Separator für die gasförmigen Reaktanten Wasserstoff (als Brenngas) und Sauerstoff (als Oxidationsgas), wobei Sauerstoff der Brennstoffzelle, üblicherweise als Bestandteil der Umgebungsluft, zugeführt wird. Die zentrale Membran-Elektroden-Einheit (Englisch: Membrane Electrode Assembly, MEA) ist das aktive Element der Brennstoffzelle. Diese besteht aus zwei durch den Elektrolyten voneinander getrennten Elektroden, einer Anode und einer Kathode, und ist beidseitig mit Gasverteilern, welche einer Gaszufuhr und Gasabfuhr dienen, sowie einem Stromableiter kontaktiert. Eine PEM-Brennstoffzelle wird durch eine Vielzahl in einem Stapel (Englisch: Stack) angeordneter MEA gebildet, die elektrisch in Reihe geschaltet sind, um eine höhere Spannung und damit eine höhere mögliche Leistung der Brennstoffzelle zu erzielen.

Für einen zuverlässigen Betrieb ist es erforderlich, aus der der PEM-Brennstoffzelle zugeführten Außenluft Partikel wie Staub und Ruß sowie Schadgase mittels geeigneter Filter zu entfernen. Dabei werden insbesondere die Brennstoffzelle bzw. speziell die Membranen der MEAs schädigende Stoffe wie Kohlenmonoxid (CO), Ammoniak (NH3), Stickoxide (NOX), Amide wie beispielsweise Harnstoff (CH4N2O) sowie Schwefelverbindungen wie beispielsweise Schwefeldioxid (SO2) oder Schwefelwasserstoff (SH2) aus der zugeführten Außenluft herausgefiltert.

Ein hierfür geeignetes Filtersystem für eine PEM-Brennstoffzelle ist beispielsweise aus der Offenlegungsschrift DE 102 30 283 A1 bekannt. Dieses umfasst ergänzend zu einem ersten Filter zur Filterung von Partikeln ein zweites Filter zur Aufnahme und Bindung gas- oder dampfförmiger Schadstoffe. Das zweite Filter weist dabei insbesondere poröse Stoffe wie beispielsweise Aktivkohle oder Kieselgur zur Aufnahme und physikalischen oder chemischen Bindung von Gasen und Dämpfen auf. Das offenbarte Filtersystem ist regenerierungsfähig ausgebildet, wobei die Regenerierung des ersten Filters mittels Druckluft und die des zweiten Filters mittels einer Temperaturerhöhung erfolgt. Die Feststellung einer Notwendigkeit der Regeneration oder einer Filterwartung des ersten Filters erfolgt durch Messen einer Druckdifferenz über das Filtersystem mittels eines Manometers, während eine Menge von dem zweiten Filter aufgenommener Schadgase mittels eines in Strömungsrichtung hinter dem zweiten Filter angeordneten Gassensors bestimmt wird. Messwerte des Manometer sowie des Gassensors werden in einer Auswerteeinrichtung mit einem jeweiligen vorgegebenen Grenzwert verglichen und bei deren Erreichen von der Auswerteeinrichtung eine Meldung erzeugt.

Aus der Veröffentlichungsschrift WO 2020/216838 A1 ist ein Diagnosesystem für eine zustandsorientierte Instandhaltung eines Filters für eine PEM-Brennstoffzelle bekannt. Dabei wird eine Beladung des Filters, welches einer Filterung der vorstehend genannten schädlichen Stoffe dient, mittels einer in Strömungsrichtung hinter dem Filter angeordneten Diagnoseanordnung bestimmt. Die Diagnoseanordnung weist hierfür wenigstens einen Indikator auf, dessen Reaktion mittels eines optischen Detektors erfasst wird. Eine solche Diagnoseanordnung wird aufgrund einer üblicherweise nur geringen Konzentration der genannten Stoffen in der Außenluft als insbesondere vorteilhaft gegenüber einem Gassensor gemäß der Offenlegungsschrift DE 102 30 283 A1 betrachtet.

Das Diagnosesystem der Veröffentlichungsschrift WO 2020/216838 A1 ermöglicht eine zustandsorientierte Instandhaltung bzw. einen zustandsabhängigen Austausch des Filters, wodurch im Vergleich zu einem Austausch des Filters gemäß vorgegebenen Wartungszeiten, beispielsweise nach jeweils einer bestimmten Betriebsstundenzahl, insbesondere über einen bei Schienenfahrzeugen typischen Einsatzzeitraum von 30 Jahren die Betriebskosten des Brennstoffzellensystems vorteilhaft verringert werden können.

Sowohl das Filtersystem der Offenlegungsschrift DE 102 30 283 A1 als auch das Diagnosesystem der Veröffentlichungsschrift WO 2020/216838 A1 erfordern für die Bestimmung des Zustands des Filters für die vorstehend genannten Stoffe einen oder mehrere Sensoren bzw. Indikatoren und optische Detektoren, welche in dem Brennstoffzellensystem ergänzend anzuordnen sind. Diese ergänzenden Komponenten sind einerseits kostenintensiv, andererseits stellen sie nur begrenzt zuverlässige Informationen bereit, aus denen ein Zustand bzw. eine Beladung des Filters abgeleitet werden kann.

Aufgabe der Erfindung ist es, ein Verfahren zum Betreiben eines Brennstoffzellensystems anzugeben, welches einen zustandsabhängigen Austausch eines Filters für Schadstoffe basierend auf einer hinreichend zuverlässigen Bestimmung der Beladung des Filters und ohne ergänzende Komponenten in dem Brennstoffzellensystem ermöglicht. Diese Aufgabe wird durch die Merkmale der unabhängigen Patentanspruchs 1 gelöst. Weiterbildungen des erfindungsgemäßen Verfahrens sind in abhängigen Patentansprüchen angegeben.

Ein erfindungsgemäßes Verfahren zum Betreiben eines Brennstoffzellensystems, wobei das Brennstoffzellensystem einer Erzeugung elektrischer Energie für einen Betrieb eines Schienenfahrzeugs dient, und wobei das Brennstoffzellensystem zumindest einen PEM-Brennstoffzellenstapel, eine erste Zuführung, welche ausgestaltet ist, Wasserstoff als Brenngas einer Anodenseite des Brennstoffzellenstapels zuzuführen, eine zweite Zuführung, welche ausgestaltet ist, Luft als Oxidationsgas einer Kathodenseite des Brennstoffzellenstapels zuzuführen, und zumindest eine Filtervorrichtung, welche in der zweiten Zuführung angeordnet ist und ausgestaltet ist, dem Brennstoffzellenstapel zugeführte Luft zu filtern, wobei die Filtervorrichtung ein erstes Filter, welches einer Filterung von Partikeln dient, und ein zweites Filter, welches einer Filterung von gasförmigen Schadstoffen dient, aufweist, umfasst. Ein Zeitpunkt eines Austausches des zweiten Filters wird erfindungsgemäß abhängig von einem Beladungszustand des zweiten Filters bestimmt, wobei der Beladungszustand mittels Messungen von Konzentrationen der gasförmigen Schadstoffe außerhalb des Brennstoffzellensystems sowie eines vorbestimmten Beladungsmodells des zweiten Filters ermittelt wird.

Erste und zweite Filter des Brennstoffzellensystems eines Schienenfahrzeugs werden abhängig von einem Erfüllen bestimmter jeweiliger Eigenschaften ausgewählt, wobei als Eigenschaften beispielsweise Filterleistungen bezüglich bestimmter Partikel bzw. Schadstoffe sowie die Einhaltung bestimmter Mindest-Wartungszeiten vorgegeben werden. Für ein die geforderten Eigenschaften erfüllendes ausgewähltes zweites Filter, beispielsweise eines bestimmten Filterherstellers, wird vorzugsweise unter Laborbedingungen ein Beladungsmodell bestimmt. Hierfür wird das zweite Filter beispielsweise mit einer bekannten hohen Konzentration des zu filternden Schadstoffes bzw. der zu filternden Schadstoffe, welche eine in natürlicher Umgebung vorkommende Konzentration um ein Vielfaches übersteigt, beaufschlagt und die Filterleistung über die Zeit bestimmt. Das Beladungsmodell definiert dann einen Zeitpunkt, ab welchem das Filter eine Beladung aufweist, die einen Austausch erforderlich macht.

Messungen der Konzentrationen der gasförmigen Schadstoffe außerhalb des Brennstoffzellensystems werden vorzugsweise von im Bereich bzw. im örtlichen Umfeld der von dem Schienenfahrzeug befahrenen Strecke angeordneten Messstationen durchgeführt. Dabei kann insbesondere auf öffentlich zugängliche Messdaten bezüglich bestimmter Schadstoffkonzentrationen, welche in der Bundesrepublik Deutschland beispielsweise von dem Bundesumweltamt bereitgestellt werden, zurückgegriffen werden. Alternativ oder ergänzend können jedoch auch Messstationen speziell für die betrachteten Schadstoffe an bestimmten Orten entlang der Strecke angeordnet werden, deren Messdaten beispielsweise ausschließlich dem Schienenfahrzeugbetreiber zugänglich sind.

Das bestimmte Beladungsmodell des eingesetzten zweiten Filters und die bereitgestellten Messdaten ermöglichen vorteilhat, einen Beladungszustand eines in einem Schienenfahrzeug eingesetzten zweiten Filters ermitteln zu können und aus dem ermittelten Beladungszustand einen geeigneten Zeitpunkt für einen Austausch zu bestimmen, ohne dass Messungen des Beladungszustands durch geeignete Sensoren in dem Brennstoffzellensystem selbst, wie es die einleitend genannten Dokumente offenbaren, durchzuführen.

Die Bestimmung des Zeitpunktes des Austausches des zweiten Filters kann dabei in einer zentralen Einrichtung des Schienenfahrzeugbetreibers und somit außerhalb des Schienenfahrzeugs erfolgen. Hierzu müssen in einer solchen zentralen Einrichtung über die Messdaten bezüglich der Schadstoffkonzentrationen im Bereich der von dem betrachteten Schienenfahrzeug befahrenen Strecke hinaus lediglich Informationen über den Zeitpunkt eines letzten Austausches des zweiten Filters sowie Betriebszeiten bzw. eine Laufleistung zur Verfügung stehen. Derartige das Schienenfahrzeug betreffende Informationen werden jedoch üblicherweise bereits von dem Schienenfahrzeugbetreiber zentral erfasst. Vorteilhaft wird durch eine solche zentrale Erfassung auch eine Bestimmung eines geeigneten Zeitpunktes für den Austausch eines zweiten Filters für mehrere Schienenfahrzeuge bzw. für eine Flotte Schienenfahrzeuge, die eine gleichen Strecke befahren, ermöglicht, da für diese eine identische oder zumindest weitgehend identische Belastung mit Schadstoffen gegeben sein sollte.

Bei der Bestimmung des Zeitpunktes des Austausches des zweiten Filters kann zudem berücksichtigt werden, dass bei dem Betrieb eines Schienenfahrzeugs bestimmte Wartungszeiten vorgegeben sind, welche insbesondere einer bestimmten Betriebszeit oder einer bestimmten Streckenleistung des Schienenfahrzeugs entsprechen. So kann beispielsweise vorgesehen sein, dass ein Schienenfahrzeug einer vierteljährlichen Wartung, welche insbesondere das Antriebssystem bzw. deren Komponenten umfasst, unterzogen wird. Da der Austausch eines zweiten Filters außerhalb der damit vorgegebenen Wartungszeitpunkte zu vermeiden ist, ist der bestimmte Zeitpunkt für einen Austausch entsprechend auf einen vorgegebenen Wartungszeitpunkt abzubilden. Dies bedeutet, dass beispielsweise anhand eines ermittelten Beladungszustands zeitnah vor dem nächsten Wartungszeitpunkt entschieden wird, ob ein zweites Filter im Rahmen der nächsten Wartung auszutauschen ist, oder ob ein Austausch erst im Rahmen einer nachfolgenden Wartung erforderlich ist.

Eine Entscheidung über den Zeitpunkt des Austauschs des zweiten Filters kann beispielsweise anhand eines Vergleichs des ermittelten Beladungszustands des zweiten Filters mit einem vorgegebenen Grenzwert für die Beladung getroffen werden. Sofern zeitnah vor dem nächsten Wartungszeitpunkt der ermittelte Beladungszustand bereits nahe dem vorgegebenen Grenzwert liegt, erfolgt ein Austausch des zweiten Filters im Rahmen der nächsten Wartung des Schienenfahrzeugs. Sollte der ermittelte Beladungszustand hingegen zwar deutlich unterhalb des Grenzwertes liegen, sodass das zweite Filter grundsätzlich nicht im Rahmen der nächsten Wartung ausgetauscht werden müsste, kann jedoch insbesondere angesichts einer zeitlichen Entwicklung der Beladung des zweiten Filters sowie vorhandener Erfahrungswerte des gleichen und/oder auch anderer die gleiche Strecke befahrender Schienenfahrzeuge bestimmt werden, dass zu einem nachfolgenden Wartungszeitpunkt der Grenzwert bereits überschritten würde, sodass ein Austausch des zweiten Filters im Rahmen der nächsten Wartung doch erforderlich ist.

Die Bestimmung eines geeigneten Zeitpunktes für einen Austausch des zweiten Filters durch eine zentrale Einrichtung des Schienenfahrzeugbetreibers ermöglicht vorteilhaft, bei dieser ergänzend Erfahrungswerte berücksichtigen zu können. Solche Erfahrungswerte entstammen beispielsweise einer Historie des Betriebs des betrachteten Schienenfahrzeugs, bevorzugt können diese jedoch einer Mehrzahl Schienenfahrzeuge entstammen. Dabei werden beispielsweise Erfahrungswerte von weiteren Schienenfahrzeugen, welche eine gleiche Strecke wie das betrachtete Schienenfahrzeug befahren, berücksichtigt, um eine Vergleichbarkeit der jeweiligen Erfahrungswerte zu gewährleisten. Insbesondere können die Erfahrungswerte beispielsweise Aussagen über eine Genauigkeit des aus Messdaten und dem vorgestimmten Beladungsmodell ermittelten Beladungszustands gegenüber einem ermittelten tatsächlichen Beladungszustand eines zweiten Filters beinhalten. Der tatsächliche Beladungszustand kann beispielsweise nach Ausbau des zweiten Filters mittels einer speziellen Messanordnung bestimmt werden. Eine solche Messanordnung kann beispielsweise in einer Wartungshalle vorgesehen sein und einer Beladungsmessung von zweiten Filtern aller in dieser Wartungshalle gewarteten Schienenfahrzeuge einer Flotte dienen.

Weiterhin können die Erfahrungswerte beispielsweise Messdaten bezüglich einer bestimmten befahrenen Strecke umfassen. Diese spiegeln beispielsweise Konzentrationen bestimmter Schadstoffe in bestimmten Zeiträumen und/oder Streckenabschnitten wider. So kann ein bestimmter Schadstoff, welcher von dem zweiten Filter gefiltert wird, beispielsweise vorwiegend jahreszeitabhängig auftreten. Beispielhaft sei Ammoniak (NH3) genannt, welches als Düngemittel in landwirtschaftlichen Gebieten vorwiegend im Frühjahr eingesetzt wird und in diesem Zeitraum entsprechend zu einer höheren Konzentration in der Luft führt. Folglich ist ein diesen Schadstoff filterndes zweites Filter in einem Schienenfahrzeug, welches überwiegend in einer landwirtschaftlich geprägten Region betrieben wird, beispielsweise im Frühjahr aufgrund einer erwarteten bzw. aus der Historie bekannt größeren Beladung mit diesem Schadstoff zu einem anderen Zeitpunkt getauscht werden als in einer anderen Jahreszeit mit einer erwarteten bzw. aus der Historie bekannt geringeren Beladung. Entsprechend können bestimmte Schadstoffe auch regional unterschiedlich auftreten, sodass für ein hauptsächlich in einer landwirtschaftlich geprägten Region betriebenes Schienenfahrzeug aufgrund einer höheren Konzentration des vorstehend genannten Ammoniaks beispielsweise ein anderer Zeitpunkt für den Austausch des zweiten Filters bestimmt wird als für ein hauptsächlich in einer beispielsweise urbanen oder bergigen Region mit wenig Ackerland betriebenes Schienenfahrzeug.

Einer ersten Weiterbildung des Verfahrens zufolge weist das zweite Filter eine Mehrzahl Filtersektionen auf, wobei jede der Filtersektionen der Filterung zumindest eines bestimmten gasförmigen Schadstoffes dient, wobei der Zeitpunkt des Austausches der jeweiligen Filtersektion abhängig von einem Beladungszustand der Filtersektion bestimmt wird, und wobei der Beladungszustand mittels der gemessenen Konzentration des bestimmten gasförmigen Schadstoffes sowie eines für die Filtersektion vorbestimmten Beladungsmodells ermittelt wird.

Das zweite Filter kann grundsätzlich als eine Filtereinheit ausgestaltet sein, wobei der Zeitpunkt des Austausches entsprechend abhängig von dem ermittelten höchsten Beladungszustand eines Schadstoffes bestimmt wird. Vorzugsweise weist das zweite Filter jedoch mehrere Filtersektionen auf, welche hinsichtlich bestimmter Schadstoffe ausgestaltet sind und individuell getauscht werden können. Beispielsweise umfasst das zweite Filter als eine erste Filtersektion ein so genanntes saures Filter, welches einer Filterung von Stickoxiden (NOx) und Kohlenwasserstoffen dient, sowie als eine zweite Filtersektion ein so genanntes basisches Filter, welches einer Filterung insbesondere des vorstehend genannten Ammoniak (NH3) dient.

Bei beispielsweise gleichen Abmaßen der beiden Filtersektionen kann deren Austausch basierend auf einem jeweils erstellten Beladungsmodell beispielsweise zu unterschiedlichen Zeitpunkten erfolgen. So kann aus dem ermittelten Beladungsmodell für die erste Filtersektion und einer angenommenen bestimmten Konzentrationen an Stickoxiden und Kohlenwasserstoffen beispielsweise folgen, dass diese Filtersektion nach jeweils sechs Monaten ausgetauscht werden sollte, während aus dem ermittelten Beladungsmodell für die zweite Filtersektion und bei einem Betrieb des Schienenfahrzeugs in einer landwirtschaftlich geprägten Region beispielsweise folgt, dass diese ebenfalls nach jeweils sechs Monaten, bei einem Betrieb in einer eher urban geprägten Region hingegen beispielsweise erst nach neun oder zwölf Monaten getauscht werden sollte.

Einer weiteren Weiterbildung des Verfahrens weist das Schienenfahrzeug zumindest einen Sensor zur Messung einer jeweiligen Konzentration der von dem zweiten Filter zu filternden gasförmigen Schadstoffe auf, wobei der zumindest eine Sensor außerhalb der Brennstoffzellenvorrichtung angeordnet ist, und wobei die Messungen des zumindest einen Sensors ergänzend zu den gemessenen Konzentrationen für die Bestimmung des Beladungszustands des zweiten Filters berücksichtigt werden.

Der zumindest eine Sensor ist vorzugsweise an einer geeigneten Stelle des Schienenfahrzeugs angeordnet, welcher es ermöglicht, Messungen der einzelnen Schadstoffe mit einer hinreichenden Genauigkeit durchzuführen. Diese beispielsweise periodisch oder auch ortsabhängig durchgeführten Messungen können beispielsweise in dem Schienenfahrzeug selbst ausgewertet werden und, sofern erfasste bzw. gebildete Messwerte beispielsweise einen jeweiligen vorgegebener Grenzwert erreichen oder überschreiten, eine entsprechende Mitteilung zu der zentralen Einrichtung des Schienenfahrzeugbetreibers übertragen werden. Alternativ können die Messwerte ohne vorherige Auswertung in dem Schienenfahrzeug zu der zentralen Einrichtung übertragen werden, in welcher sie anschließend ausgewertet und für die Ermittlung des Beladungszustands des zweiten Filters berücksichtigt werden.

Gemäß einer weiteren Weiterbildung des Verfahrens werden von dem Schienenfahrzeug Betriebsparameter des Brennstoffzellensystems bestimmt, welche bei der Ermittlung des Beladungszustands des zweiten Filters ergänzend berücksichtigt werden.

Ein solcher Betriebsparameter ist beispielsweise eine von dem Brennstoffzellensystem erzeugte elektrische Leistung, aus welcher eine für die Erzeugung dieser Leistung erforderliche Luftmenge bestimmbar ist, welche wiederum für die Ermittlung des Beladungszustands des zweiten Filters beispielsweise durch die zentrale Einrichtung des Schienenfahrzeugbetreibers berücksichtigt werden kann. Informationen über die Leistung des Brennstoffzellensystems über die Zeit werden beispielsweise von dem Schienenfahrzeug zu der zentralen Einrichtung übertragen.

Einer weiteren Weiterbildung des Verfahrens zufolge wird ein Zeitpunkt eines Austausches des ersten Filters abhängig von einem Beladungszustand des ersten Filters bestimmt, wobei der Beladungszustand mittels einer Druckdifferenz in Strömungsrichtung der Luft vor und hinter dem ersten Filter oder vor und hinter der Filtervorrichtung ermittelt wird.

Im Unterschied zu einer Ermittlung der Beladung des zweiten Filters kann eine Beladung eines oder mehrerer Partikelfilter in vergleichsweise einfacher und zuverlässiger Weise anhand einer gemessenen Druckdifferenz ermittelt werden. Hierzu ist beispielsweise ein jeweiliger Drucksensor vor und hinter dem ersten Filter bzw. vor und hinter der Filtervorrichtung angeordnet, aus deren Signalen in einer Auswerteeinrichtung eine Druckdifferenz bestimmt wird. Diese bestimmte Druckdifferenz wird beispielsweise mit einem vorgegebenen Grenzwert verglichen und bei Erreichen oder Überschreiten des Grenzwertes von der Auswerteeinrichtung ein diesbezügliches Signal bzw. eine entsprechende Meldung ausgegeben.

Sowohl die Drucksensoren als auch die Auswerteeinrichtung müssen dabei jedoch nicht permanent in dem Brennstoffzellensystem angeordnet sein. Vielmehr können die Drucksensoren beispielsweise im Rahmen der Wartung des Schienenfahrzeugs von einem Wartungstechniken an vorgesehenen Stellen der ersten Zuführung temporär angeordnet werden und ein jeweiliger Messwert dem Wartungstechniker beispielsweise auf einem tragbaren Anzeigegerät angezeigt werden, oder dem Wartungstechniker an dem tragbaren Anzeigegerät eine entsprechende Meldung ausgegeben werden, wenn die Druckdifferenz den Grenzwert erreicht bzw. überschreitet. Abhängig von dieser Informationen bzw. einer solchen Meldung erfolgt dann ein Austausch des ersten Filters durch den Wartungstechniker.

Entsprechend dem zweiten Filter kann auch das erste Filter kann grundsätzlich als eine Filtereinheit ausgestaltet sein oder alternativ mehrere Filtersektionen umfassen. Solche mehreren Filtersektionen sind beispielsweise hinsichtlich unterschiedlicher Partikelgrößen ausgestaltet, wobei in Strömungsrichtung der Luft betrachtet in jeder Filtersektion kleinere Partikel gefiltert werden. Vorzugsweise ist das erste Filter bzw. sind alle Filtersektionen des ersten Filters in Strömungsrichtung der Luft betrachtet vor dem zweiten Filter angeordnet, sodass dieses keine bzw. nur eine geringe Beladung mit Partikeln erfährt.

Als erstes Filter bzw. Filtersektionen sind Trockenfilter aus Textilien, Kunststoff, Glasfaser oder Papier geeignet, wobei beispielsweise eine erste Filtersektion als Grobfilter für Rußpartikel oder Staub wirkt, während eine nachgeordnete zweite Filtersektion als Feinfilter zur Abscheidung von beispielsweise organischen Stoffen wie Pollen oder Dieselrußpartikeln dient, und eine wiederum nachgeordnete dritte Filtersektion als Feinstfilter zur Abscheidung von beispielsweise Bakterien, Viren und Sporen dient.

Ein Ausführungsbeispiel der Erfindung wird nachfolgend unter Bezugnahme auf Figuren beschrieben. Dabei zeigen:
- FIG 1: ein Schienenfahrzeug, und
- FIG 2: ein Brennstoffzellensystem des Schienenfahrzeugs mit einer kathodenseitigen Filtervorrichtung.

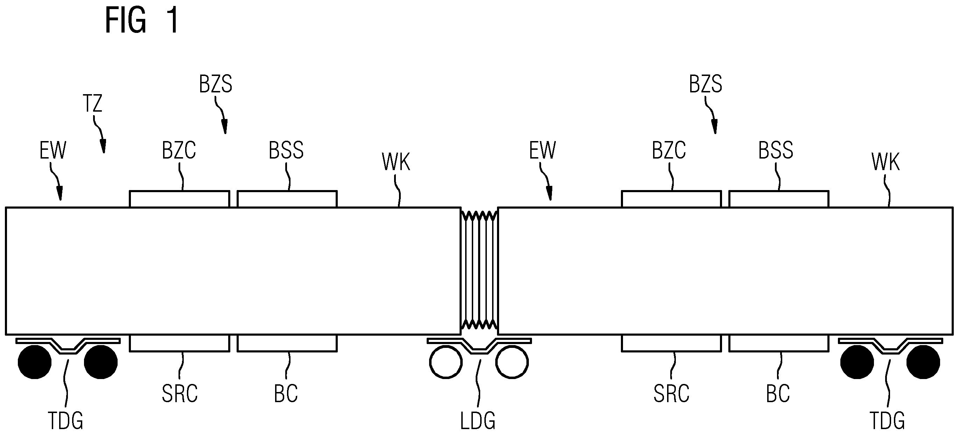

FIG 1 zeigt eine schematische Seitenansicht eines Schienenfahrzeugs TZ, welches beispielhaft als ein Triebzug bestehend aus einer Mehrzahl Wagen für die Personenbeförderung ausgestaltet ist. Abhängig von der Anzahl beförderbarer Personen weist ein Triebzug üblicherweise zwei Endwagen EW1, EW2 sowie eine Anzahl Mittelwagen auf. In einer Mindestkonfiguration kann ein Triebzug jedoch wie dargestellt auch aus lediglich zwei Endwagen EW bestehen. Alternativ kann das Schienenfahrzeug jedoch in gleicher Weise als ein Triebwagen oder eine Lokomotive ausgestaltet sein, welche jeweils aus lediglich einem Wagen bestehen. Die in der FIG 1 dargestellten Endwagen EW verfügen über einen jeweiligen Wagenkasten WK mit einem darin vorgesehenen Fahrgastraum sowie einem Fahrzeugführerstand, wobei sich die Wagenkästen über ein jeweiliges angetriebenes Triebdrehgestell TDG auf nicht dargestellten Schienen der zu befahrenden Strecke abstützen. Ferner sind die beiden Wagenkasten WK der Endwagen EW auf einem gemeinsamen nicht angetriebenen Laufdrehgestell LDG, insbesondere auf einem so genannten Jakobs-Drehgestell, abgestützt. Die Fahrgasträume der Endwagen EW können von Fahrgästen über in Seitenwänden des jeweiligen Wagenkastens WK angeordnete, nicht dargestellte Türen betreten und verlassen werden. Weiterhin können Fahrgäste über einen die Wagenkästen WK bzw. die Fahrgasträume verbindenden Wagenübergang in den Fahrgastraum des jeweils anderen Endwagens EW gelangen.

Auf dem Dach sowie unter dem Boden bzw. im Unterflurbereich des Wagenkastens WK des jeweiligen Endwagens EW sind beispielhaft mehrere Container für Komponenten und elektrische Geräte als Bestandteile der elektrischen Ausrüstung des Triebzugs angeordnet, welche sowohl der Erzeugung elektrischer Energie als auch dem Antrieb bzw. der Traktion sowie diversen Hilfsbetrieben des Triebzugs dienen.

Der Triebzug ist für einen Betrieb auf nicht oder nur teilelektrifizierten Strecken des Schienennetzes ausgestaltet, weshalb er nicht über einen mit einer netzseitigen Oberleitung verbindbaren Stromabnehmer verfügt. Vielmehr wird die für den Betrieb des Triebzugs erforderliche elektrische Energie mittels zweier Brennstoffzellensysteme BZS generiert, wobei jeder der beiden Endwagen EW beispielhaft über ein eigenes Brennstoffzellensystem BZS verfügt, welches insbesondere elektrische Energie für die Versorgung des jeweiligen Triebdrehgestells TDG bzw. dessen elektrische Motoren bereitstellt.

Mechanische und elektrische Hauptkomponenten des Brennstoffzellensystems BZS, insbesondere ein PEM-Brennstoffzellenstapel, ein Verdichter, Luftfilter sowie Befeuchter sind in einem jeweiligen Brennstoffzellencontainer BZC auf dem Dach des jeweiligen Endwagens EW angeordnet. Der für den Betrieb des jeweiligen Brennstoffzellensystems BZS erforderliche Wasserstoff ist in einem jeweiligen Brennstoffspeicher BSS gelagert, welcher ebenfalls auf dem Dach des jeweiligen Endwagens EW angeordnet und über geeignete Leitungen bzw. Rohre fluidtechnisch mit dem Brennstoffzellencontainer BZC verbunden ist. Neben den genannten Container BZC und Brennstoffspeicher BSS können auf dem Dach des jeweiligen Endwagens EW weitere Container wie beispielsweise ein Klimatisierungscontainer, in welchem elektrische und mechanische Komponenten für die Klimatisierung des jeweiligen Fahrgastraums als auch Komponenten insbesondere für eine Temperierung von Komponenten des Brennstoffzellensystems BZS angeordnet sind, angeordnet sein.

Im Unterflurbereich des jeweiligen Endwagens EW ist hingegen ein Batteriecontainer BC für eine von dem Brennstoffzellensystem BZS beispielsweise über einen Gleichspannungssteller speisbare Batterie vorgesehen, wobei die Batterie insbesondere einer Versorgung der Hilfsbetriebe des Brennstoffzellensystems sowie einem Ausgleich kurzzeitiger Lastschwankungen dient. Ferner ist im Unterflurbereich des jeweiligen Endwagens EW beispielhaft ein Stromrichtercontainer SRC für einen Traktionsstromrichter vorgesehen, welcher insbesondere mit dem Brennstoffzellensystem und der Batterie verbunden ist und Fahrmotoren in dem jeweiligen Triebdrehgestell TDG mit elektrischer Energie, insbesondere mit einem Wechselstrom variabler Spannung und Frequenz, versorgt.

Neben den aufgeführten Containern und darin angeordneten Systemen und Komponenten können weitere, nicht speziell dargestellte jedoch für den Betrieb des Triebzugs erforderliche Komponenten und Einrichtungen, insbesondere Einrichtungen zur Steuerung der diversen Systeme und Komponenten, in oder an dem Wagenkasten WK des jeweiligen Endwagens EW vorgesehen sein. Auch ist, insbesondere wenn der Triebzug ergänzend über eine Anzahl Mittelwagen verfügt, eine Verteilung der verschiedenen Container und Komponenten auf mehrere Wagen möglich, insbesondere um vorgegebene maximale Radlasten einhalten zu können.

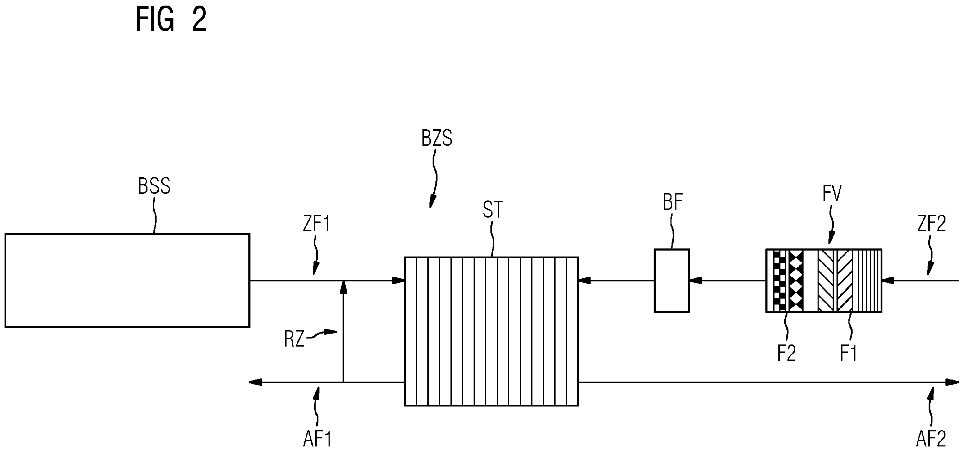

FIG 2 zeigt schematisch ein Brennstoffzellensystem BZS für das Schienenfahrzeug TZ bzw. für einen jeweiligen Endwagen EW des Triebzugs der FIG 1. Dabei sind für eine vereinfachte Darstellung nicht alle für den Betrieb des Brennstoffzellensystems BZS erforderlichen mechanischen und elektrischen Komponenten zeichnerisch angegeben. Das Brennstoffzellensystem BZS umfasst als zentrale Komponente eine PEM-Brennstoffzelle mit einer Vielzahl in einem Stapel angeordneter und elektrisch in Reihe geschalteter Membran-Elektroden-Einheiten. Eine von dem Brennstoffzellensystem BZS generierbare Leistung liegt dabei im Bereich mehrerer hundert Kilowatt.

Dem Brennstoffzellenstapel ST werden die beiden für den elektro-chemischen Prozess erforderlichen Reaktanten Wasserstoff und Sauerstoff zugeführt. Die Anodenseite des Brennstoffzellenstapels ST ist hierfür über eine erste Zuführung ZF1 mit dem Brennstoffspeicher BSS verbunden, in dem Wasserstoff gespeichert ist. Ein in der ersten Zuführung ZF1 angeordnetes, nicht dargestelltes, Druckregelventil dient der Einstellung eines gewünschten Drucks des gasförmigen Wasserstoffs. Die Zufuhr des Wasserstoffs erfolgt überstöchiometrisch, dem Brennstoffzellenstapel ST wird also mehr Wasserstoff zugeführt als dieser verbraucht. Der während des Prozesses nicht verbrauchte Wasserstoff wird als Anodenabgas der ersten Zuführung ZF1 über eine erste Abführung AF1 abgeführt bzw. über einen die erste Abführung AF1 mit der ersten Zuführung ZF1 verbindenden Rezirkulationszweig RZ wieder zugeführt und mit nachströmenden Wasserstoff aus dem Brennstoffspeicher BSS vermischt. Weitere nicht dargestellte Komponenten wie insbesondere ein Wasserabscheider zum Abscheiden von in das Anodenabgas gelangendem Reaktionswasser, ein so genanntes Purge-Ventil zum Ablassen von Stickstoff sowie ein Druckablassventil für einen Schutz der Brennstoffzelle vor Überdruck sind üblicherweise ebenfalls auf der Anodenseite des Brennstoffzellenstapels ST vorgesehen.

Der Kathodenseite des Brennstoffzellenstapels ST wird hingegen sauerstoffhaltige Umgebungsluft über eine zweite Zuführung ZF2 zugeführt. Die Luft wird hierfür über einen in der zweiten Zuführung ZF2 angeordneten und nicht speziell dargestellten elektrisch betriebenen Luftverdichter aus der Umgebung des Schienenfahrzeugs TZ angesaugt. Die Zufuhr des Sauerstoffs erfolgt ebenfalls überstöchiometrisch, dem Brennstoffzellenstapel ST wird also auch mehr Sauerstoff zugeführt als dieser verbraucht. Das Kathodenabgas wird über eine zweite Abführung AF2 wieder an die Umgebung abgeführt.

Die von dem Luftverdichter angesaugte Luft wird mittels einer Filtervorrichtung FV mit einem ersten Filter F1 und einem nachgeschalteten zweiten Filter F2 von Partikeln und chemischen Verbindungen, welche die Membranen des Brennstoffzellenstapels ST beschädigen bzw. deren Funktion beeinträchtigen können, befreit. Stromabwärts der Filtervorrichtung FV ist in der zweiten Zuführung ZF2 ein Befeuchter BF angeordnet, welcher einer Befeuchtung der durchströmenden gereinigten Luft zur Vermeidung eines Austrocknens der Membranen des Brennstoffzellenstapels ST dienen.

Erste F1 und zweite Filter F2 der Filtervorrichtung FV sind beispielhaft in einem gemeinsamen Gehäuse angeordnet. Die mittels des Luftverdichters angesaugte Luft wird zunächst durch das erste Filter F1 geführt, welches dem Abscheiden von Partikeln dient. Das erste Filter F1 kann dabei, wie schematisch mittels unterschiedlicher Schraffierungen dargestellt, mehrere Filtersektionen umfassen, welche hinsichtlich verschiedener Partikelgrößen ausgestaltet sind. Eine in Strömungsrichtung der Luft erste Filtersektion dient dabei beispielsweise als Grobfilter für Rußpartikel oder Staub, eine anschließende zweite Filtersektion dient als Feinfilter einer Abscheidung von beispielsweise organischen Stoffen wie Pollen oder Dieselrußpartikeln und eine wiederum anschließende dritte Filtersektion dient als Feinstfilter einer Abscheidung von beispielsweise Bakterien, Viren und Sporen. Ein Austausch des ersten Filters F1 sollte ebenso wie der Austausch des zweiten F2 abhängig von einer Beladung bzw. einem Zustand des ersten Filters F1 bzw. der einzelnen Filtersektionen erfolgen. Der Beladungszustand wird beispielsweise durch Messen eines jeweiligen Drucks in Strömungsrichtung der Luft vor und hinter dem ersten Filter F1 oder vor und hinter der Filtervorrichtung FV ermittelt. Hierzu können in dem Gehäuse der Filtervorrichtung FV vor und hinter dem ersten Filter F1 entsprechende Drucksensoren angeordnet sein, deren jeweiligen Signale bezüglich des gemessenen Drucks zu einer Auswerteeinrichtung in dem Schienenfahrzeug übertragen werden. In der Auswerteeinrichtung wird aus den empfangenen Signalen eine Druckdifferenz ermittelt und beispielsweise mit einem vorgegebenen Grenzwert verglichen. Sollte der Grenzwert erreicht bzw. überschritten werden, so gibt die Auswerteeinrichtung eine Meldung aus, welche beispielsweise zu einer zentralen Steuereinrichtung des Schienenfahrzeugs sowie gegebenenfalls von dieser zu einer zentralen Einrichtung des Schienenfahrzeugbetreibers übermittelt wird. Alternativ zu einer Anordnung in dem Gehäuse der Filtervorrichtung FV können die Drucksensoren beispielsweise auch in der zweiten Zuführung ZF2 vor und hinter der Filtervorrichtung FV angeordnet sein, wobei in diesem Fall eine zusätzliche Druckminderung durch das zweite Filter F2 berücksichtigt werden muss.

Die mittels des ersten Filters F1 von Partikeln befreite Luft wird anschließend durch das zweite Filter F2 geführt. Das zweite Filter F2 dient einer ergänzenden Abscheidung oder Bindung von Schadgasen bzw. chemischen Stoffen wie beispielsweise Kohlenmonoxid (CO), Ammoniak (NH3), Stickoxide (NOX), Amide wie beispielsweise Harnstoff (CH4N2O) sowie Schwefelverbindungen wie beispielsweise Schwefeldioxid (SO2) oder Schwefelwasserstoff (SH2). Das zweite Filter F2 kann dabei entsprechend dem ersten Filter F1 als eine Filtereinheit ausgestaltet sein, welches als Ganzes ausgetauscht wird, oder in eine Mehrzahl Filtersektionen unterteilt sein, wobei jede Filtersektion einer Filterung eines oder mehrerer bestimmter gasförmiger Schadstoffe dient, und welche abhängig von einem Erreichen eines bestimmten Beladungszustands individuell austauschbar sind. Beispielsweise dient ein saures Filter als eine erste Filtersektion des zweiten Filters F2 der Filterung von Stickoxiden (NOx) und Kohlenwasserstoffen, während ein basisches Filter als eine zweite Filtersektion des zweiten Filters F2 einer Filterung von Ammoniak (NH3) dient.

Der jeweilige Beladungszustand der beiden Filtersektionen des zweiten Filters F2 erfolgt im Unterschied zu dem ersten Filter F1 nicht über Messungen in situ, also in dem Brennstoffzellensystem BZS selbst, sondern basierend auf einem jeweiligen Beladungsmodell des eingesetzten Filters bzw. der Filtersektionen und Messungen von Konzentrationen der zu filternden Schadstoffe außerhalb des Brennstoffzellensystems BZS, insbesondere außerhalb des Schienenfahrzeugs TZ.

Ein Beladungsmodell der jeweiliges Filtersektion des zweiten Filters F2 wird beispielsweise unter Laborbedingungen bestimmt oder bereits von dem Filterhersteller vorgegeben. Dieses definiert bei einer bekannten Menge bzw. Konzentration des zu filternden Schadstoffes pro Zeiteinheit einen Zeitpunkt, ab welchem das Filter eine Beladung mit diesem Schadstoff aufweist, die einen Austausch erforderlich macht.

Die Konzentrationen an Schadstoffen, welchen das Schienenfahrzeug TZ bzw. dessen Brennstoffzellensysteme BZS während des Betriebs ausgesetzt sind, werden im örtlichen Umfeld der von dem Schienenfahrzeug TZ befahrenen Strecke bestimmt. Hierfür können beispielsweise spezielle Messstationen an bestimmten Orten entlang der Strecke vorgesehen sein, vorzugsweise wird hierfür jedoch auf von öffentlichen Institutionen bereitgestellte Messdaten zurückgegriffen.

Zusammen mit Betriebsdaten des Schienenfahrzeugs TZ, insbesondere der Kenntnis über die befahrene Strecke, eine Betriebszeit bzw. eine Laufleistung wird in der zentralen Einrichtung des Schienenfahrzeugbetreibers auf Basis des jeweiligen Beladungsmodells und der bekannten Schadstoffkonzentrationen ein jeweiliger Beladungszustand der Filtersektionen des zweiten Filters F2 ermittelt. Dieser jeweils ermittelte Beladungszustand wird in der zentralen Einrichtung mit einem Grenzwert verglichen, und aus dem Vergleich ein Zeitpunkt bestimmt, an dem ein Austausch der jeweiligen Filtersektion erfolgen sollte, um einen sicheren Betrieb des Brennstoffzellensystems BZS und damit des Schienenfahrzeugs TZ zu gewährleisten.

Der für den Vergleich verwendete Grenzwert der Beladung ist dabei derart gewählt, dass auch bei Erreichen des Grenzwertes ein sicherer Weiterbetrieb des Brennstoffzellensystems BZS bis zu einem nächsten planmäßigen Wartungszeitpunkt für das Schienenfahrzeug TZ sichergestellt ist. Im Rahmen der Wartung erfolgt dann ein Austausch der Filtersektion, für welche ein Erreichen des Grenzwertes festgestellt wurde.

Die Beladungsmodelle der Filtersektionen des zweiten Filters F2 sind vorzugsweise variabel gestaltet, sodass diese beispielsweise basierend auf historischen Erfahrungswerten für das Schienenfahrzeug TZ sowie weiteren die gleiche Strecke befahrenden Schienenfahrzeugen angepasst werden können. Hierfür kann beispielsweise die tatsächliche Beladung der jeweiligen Filtersektion nach erfolgtem Austausch durch geeignete Messungen ermittelt werden und das Beladungsmodell dem tatsächlichen Beladungswert angenähert werden. Insbesondere können jedoch auch Erfahrungswerte hinsichtlich variierender Schadstoffbelastungen in bestimmten Zeiträumen bei einer Anpassung des Beladungsmodells berücksichtigt werden, sodass dieses zeitabhängig definiert ist. Ergänzend können von dem Schienenfahrzeug TZ selbst spezifische Messungen einer Schadstoffkonzentration auf der befahrenen Strecke durchgeführt werden, welche entsprechend für eine Anpassung des Beladungsmodells berücksichtig werden. Dies kann insbesondere sinnvoll sein, wenn keine speziellen Messtationen im örtlichen Umfeld der Strecke angeordnet sind. Hierzu kann das Schienenfahrzeug beispielsweise temporär mit einem oder mehreren geeigneten Sensoren ausgestattet werden.

### Bezugszeichen

- AF1: erste Abführung
- AF2: zweite Abführung
- BC: Batteriecontainer
- BF: Befeuchter
- BSS: Brennstoffspeicher
- BZC: Brennstoffzellencontainer
- BZS: Brennstoffzellensystem
- EW: Endwagen
- F1: erstes Filter
- F2: zweites Filter
- FV: Filtervorrichtung
- LDG: Laufdrehgestell
- RZ: Rezirkulationszweig
- SRC: Stromrichtercontainer
- ST: Brennstoffzellenstapel
- TDG: Triebdrehgestell
- TZ: Schienenfahrzeug
- WK: Wagenkasten
- ZF1: erste Zuführung
- ZF2: zweite Zuführung

## Patentansprüche

1. Verfahren zum Betreiben eines Brennstoffzellensystems (BZS), wobei das Brennstoffzellensystem (BZS) einer Erzeugung elektrischer Energie für einen Betrieb eines Schienenfahrzeugs (TZ) dient,
wobei das Brennstoffzellensystem (BZS) zumindest aufweist:
- einen Brennstoffzellenstapel (ST),
- eine erste Zuführung (ZF1), welche ausgestaltet ist, Wasserstoff als Brenngas einer Anodenseite des Brennstoffzellenstapels (ST) zuzuführen,
- eine zweite Zuführung (ZF2), welche ausgestaltet ist, Luft als Oxidationsgas einer Kathodenseite des Brennstoffzellenstapels (ST) zuzuführen, und
- zumindest eine Filtervorrichtung (FV), welche in der zweiten Zuführung (ZF2) angeordnet ist und ausgestaltet ist, dem Brennstoffzellenstapel (ST) zugeführte Luft zu filtern, wobei die Filtervorrichtung (FV) ein erstes Filter (F1), welches einer Filterung von Partikeln dient, und ein zweites Filter (F2), welches einer Filterung von gasförmigen Schadstoffen dient, umfasst,
und wobei
- ein Zeitpunkt eines Austausches des zweiten Filters (F2) abhängig von einem Beladungszustand des zweiten Filters (F2) bestimmt wird, wobei der Beladungszustand mittels Messungen von Konzentrationen der gasförmigen Schadstoffe außerhalb des Brennstoffzellensystems (BZS) sowie eines vorbestimmten Beladungsmodells des zweiten Filters (F2) ermittelt wird.

2. Verfahren nach Anspruch 1, wobei
das zweite Filter (F2) eine Mehrzahl Filtersektionen aufweist, wobei jede der Filtersektionen der Filterung zumindest eines bestimmten gasförmigen Schadstoffes dient, wobei der Zeitpunkt des Austausches der jeweiligen Filtersektion abhängig von einem Beladungszustand der Filtersektion bestimmt wird, und wobei der Beladungszustand mittels der gemessenen Konzentration des bestimmten gasförmigen Schadstoffes sowie eines für die Filtersektion vorbestimmten Beladungsmodells ermittelt wird.

3. Verfahren nach Anspruch 1 oder 2, wobei
das Schienenfahrzeug (TZ) zumindest einen Sensor zur Messung einer jeweiligen Konzentration der von dem zweiten Filter (F2) zu filternden gasförmigen Schadstoffe aufweist, wobei der zumindest eine Sensor außerhalb der Brennstoffzellenvorrichtung angeordnet ist, und wobei die Messungen des zumindest einen Sensors ergänzend zu den gemessenen Konzentrationen für die Bestimmung des Beladungszustands des zweiten Filters berücksichtigt werden.

4. Verfahren nach einem der vorstehenden Ansprüche, wobei von dem Schienenfahrzeug (TZ) Betriebsparameter des Brennstoffzellensystems (BZS) bestimmt werden, welche bei der Ermittlung des Beladungszustands des zweiten Filters (F2) ergänzend berücksichtigt werden.

5. Verfahren nach einem der vorstehenden Ansprüche, wobei ein Zeitpunkt eines Austausches des ersten Filters (F1) abhängig von einem Beladungszustand des ersten Filters (F1) bestimmt wird, wobei der Beladungszustand mittels einer Druckdifferenz in Strömungsrichtung der Luft vor und hinter dem ersten Filter (F1) oder vor und hinter der Filtervorrichtung (FV) ermittelt wird.
